# EUROPÄISCHE PATENTSCHRIFT

(11) **EP 2 988 841 B1**
(45) Veröffentlichungstag und Bekanntmachung des Hinweises auf die Patenterteilung: **09.08.2017**
(21) Anmeldenummer: 14714965.2
(22) Anmeldetag: 26.03.2014
(51) Int. Cl.: B01D 3/14, C01B 33/107, C07F 7/20

(54) **VERFAHREN UND VORRICHTUNG ZUR DESTILLATIVEN TRENNUNG EINES DREI- ODER MEHRKOMPONENTENGEMISCHES**
METHOD AND APPARATUS FOR THE SEPARATION BY DISTILLATION OF A THREE- OR MULTI-COMPONENT MIXTURE
PROCÉDÉ ET DISPOSITIF DE SÉPARATION PAR DISTILLATION D'UN MÉLANGE À TROIS COMPOSANTS OU À COMPOSANTS MULTIPLES

(30) Priorität: 22.04.2013 DE 102013207282
(43) Veröffentlichungstag der Anmeldung: 02.03.2016
(73) Patentinhaber: Wacker Chemie AG, 81737 München (DE)
(72) Erfinder: SCHREIEDER, Franz, 84367 Tann (DE); AIGNER, Maximilian, 84489 Burghausen (DE); PROCHASKA, Jan, 84561 Mehring (DE)
(74) Vertreter: Potten, Holger
(86) Internationale Anmeldenummer: PCT/EP2014/056055
(87) Internationale Veröffentlichungsnummer: WO 2014/173604

(56) Entgegenhaltungen:
- EP-A2- 1 681 094
- WO-A2-2009/092682
- DE-A1- 10 021 703
- DE-A1- 19 963 017
- DE-A1-102004 040 284
- DE-A1-102008 000 490
- US-A- 4 419 188
- US-A1- 2004 011 706
- US-A1- 2007 227 875

## Beschreibung

Die Erfindung betrifft die Rektifikation bzw. Destillation eines Drei- oder Mehrkomponentengemisches, also ein Verfahren zur destillativen Trennung eines vorliegenden Gemisches in seine Bestandteile, sowie eine Vorrichtung zur Durchführung des Verfahrens durch geeignete Kopplung von Destillationskolonnen.

Destillative Verfahren sind in der chemischen Verfahrenstechnik üblich, um Gemische verschiedener relativer Flüchtigkeit und/oder ineinander löslicher Stoffe thermisch zu trennen.

Für die kontinuierliche destillative Zerlegung von Mehrstoffgemischen sind verschiedene Verfahrensvarianten gebräuchlich.

Im einfachsten Fall wird ein Zulaufgemisch, bestehend aus einer Leicht- und einer Schwersiederfraktion in seine zwei Fraktionen, eine leichtsiedende Kopffraktion und eine schwersiedende Sumpffraktion, zerlegt. Dabei wird das zu trennende Gemisch zwischen Sumpf und Kopf der Destillationskolonne eingebracht. Der Zulauf unterteilt die Kolonne in einen Verstärkungsteil und einen Abtriebsteil. Die schwersiedende Fraktion wird im Sumpf aus der Kolonne entnommen. Ein Teil des Konzentrats wird durch eine Heizung (z.B. einem Naturumlaufverdampfer), die im Sumpfbereich eingebaut ist, verdampft. Der Leichtsieder steigt als Brüden in der Kolonne hoch, wird am Kopf der Kolonne aus dieser abgezogen und in einem Kondensator verflüssigt. Ein Teil des Kondensats wird wieder in die Kolonne zurückgeführt und läuft im Gegenstrom zu den aufsteigenden Brüden nach unten (Rücklauf).

Bei der Auftrennung von Zulaufgemischen, bestehend aus einem Mehrkomponentengemisch in mehr als zwei Fraktionen müssen dann jedoch mehrere konventionelle Destillationskolonnen eingesetzt werden.

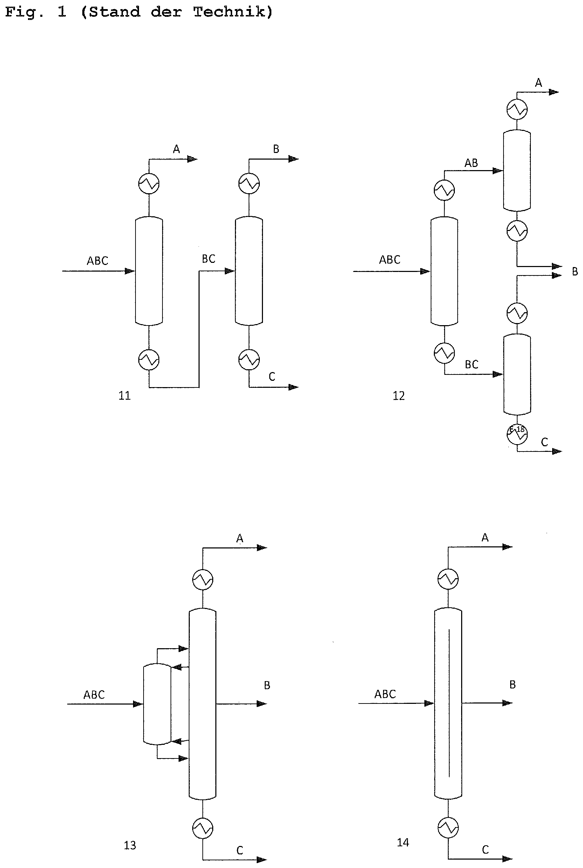

**Fig. 1** zeigt Möglichkeiten zur Auftrennung eines Dreikomponentengemisches **ABC**, enthaltend Leichtsieder **A**, Mittelsieder **B** und Schwersieder **C**.

Dabei zeigen **11** den a-Pfad, **12** die stoffliche Kopplung mit Vortrennung, **13** die stoffliche Kopplung mit Vorkolonne, **14** eine klassische Trennwandkolonne.

Beim a-Pfad **11** wird in einer ersten Kolonne der Leichtsieder **A** als Kopfprodukt abgetrennt. Die Sumpffraktion ist ein Gemisch aus Mittelsieder **B** und Schwersieder **C**, das in einer nachgeschalteten Kolonne in die beiden reinen Substanzen **B** und **C** aufgetrennt wird.

Bei der stofflichen Kopplung mit Vortrennung (a/c-Pfad) **12** erfolgt die Trennung in der ersten Kolonne so, dass das Kopfprodukt keinen Schwersieder **C** und das Sumpfprodukt keinen Leichtsieder **A** enthält. Die Trennung erfolgt somit zwischen dem Leichtsieder **A** und dem Schwersieder **C**. Der Mittelsieder **B** ist sowohl in der Kopffraktion als auch in der Sumpf fraktion enthalten. Beide Fraktionen **AB** und **BC** werden in je einer nachgeschalteten Kolonne in die reinen Produkte **A, B, C** zerlegt. Damit benötigt Variante **12** drei Trennschritte.

Beim c-pfad (nicht dargestellt) wird in der ersten Kolonne **C** als reines Sumpfprodukt abgetrennt und Gemisch **AB** als Kopfprodukt üblicherweise dampfförmig an die zweite Kolonne übergeben.

Grundsätzlich gilt bei der Auftrennung eines Dreikomponentengemisches, dass die Wahl des geeigneten Pfades (a-Pfad, c-Pfad, a/c Pfad) von der Zusammensetzung der Zugabe abhängt.

Bei hohen Gehalten an Leichtsieder **A** ist der a-Pfad bevorzugt. Andererseits ist der c-Pfad bei hohen Gehalten an Schwersieder **C** zu bevorzugen.

Ist der Mittelsiederanteil **B** hoch, wird bevorzugt der a/c-Pfad gewählt.

Bei der stofflichen Kopplung mit Vorkolonne 13 sind beide Kolonnen stofflich gekoppelt (damit zweifache stoffliche Kopplung; sog. Petlyuk-Verschaltung).

Eine Alternative zur Kopplung mehrerer Destillationskolonnen sind sogenannte Trennwandkolonnen, d.h. Kolonnen, die mittels einer in Kolonnenlängsrichtung angeordneten vertikalen Trennwand eine Quervermischung von Flüssigkeits- und Brüdenströmen in Teilbereichen der Kolonne verhindern. Bei dieser Kolonne verläuft also über einen Teil der Kolonnenhöhe eine vertikale Trennwand, welche den Querschnitt in zwei Abschnitte links und rechts der Trennwand aufteilt.

**Fig. 1** **- Nr. 14** zeigt eine klassische Trennwandkolonne, bei der Schwersieder als Sumpf, der Mittelsieder über den Seitenabzug und der Leichtsieder über den Kopfstrom abgeführt wird.

Dabei ist es möglich, zum Beispiel ein Dreistoffgemisch in einer einzigen Kolonne in seine drei reinen Bestandteile zu zerlegen, wozu normalerweise zwei konventionelle Kolonnen benötigt würden.

Die in Kolonnenlängsrichtung angeordnete Trennwand teilt den Kolonneninnenraum in einen Zulaufteil, einen Entnahmeteil, einen oberen gemeinsamen Kolonnenteil (Auftriebsteil) und einen unteren gemeinsamen Kolonnenteil (Abtriebsteil).

Der Zulauf des aufzutrennenden Gemisches wird in der Regel in einen mittleren Bereich des Zulaufteils (links der Trennwand), zwischen einem oberen und einem unteren Bereich des Zulaufteils gelegt. Es ist auch möglich, eine oder mehrere weitere Zuläufe zwischen einem oberen und einem unteren Bereich des Zulaufteils vorzusehen.

Im Entnahmeteil - rechts der Trennwand - ist zwischen einem oberen und einem unteren Bereich eine oder mehrere Seitenabzüge angeordnet. Es ist auch möglich, einen weiteren Seitenabzug zwischen dem unteren und einem untersten Bereich des Entnahmeteils vorzusehen.

WO 2009092682 A1 offenbart ein Verfahren zur destillativen Aufarbeitung von 1,5,9- Cyclododecatrien (CDT), sowie eine Vorrichtung zur Durchführung des Verfahrens. Die Lösung geht aus von einem Verfahren zur destillativen Aufarbeitung von Roh-CDT, das durch die Trimerisierung von Butadien gewonnen wurde.
Zur destillativen Auftrennung des als Mehrkomponentengemisch anfallenden Roh-CDT werden Trennwandkolonnen verwendet. Die Trennwand, die aus einem Blech oder mehreren zusammengefügten Einzelblechen bestehen kann, unterteilt die Kolonne in Längsrichtung in deren mittleren Teil in einen Zulaufteil und einen Entnahmeteil. Bezüglich der einsetzbaren trennwirksamen Einbauten in der Trennwandkolonne sind sowohl Füllkörper als auch geordnete Packungen oder Trennböden geeignet. Es ist möglich, die Trennwand in Form von lose gesteckten Teilsegmenten auszugestalten.

US 6884324 B2 offenbart eine Kolonne zur Aufkonzentration von Phthalsäureanhydrid (PSA) mit zwei Destillationsstufen, in der die Abdestillation der Leichtsieder im Roh-PSA in der ersten Destillationsstufe erfolgt und die Abtrennung der Schwersieder aus dem Rein-PSA in der zweiten Destillationsstufe durchgeführt wird, wobei beide Destillationsstufen nebeneinander angeordnet sind und durch eine senkrecht angeordnete Wand vollständig voneinander getrennt sind, dadurch gekennzeichnet, dass der Sumpf der ersten Destillationsstufe mit dem Sumpf der zweiten Destillationsstufe verbunden ist. Der Sumpf der ersten Destillationsstufe kann durch ein Überlaufrohr mit dem Sumpf der zweiten Destillationsstufe verbunden sein. Ebenso kann der Sumpf der ersten Destillationsstufe durch eine Pumpe mit dem Sumpf der zweiten Destillationsstufe verbunden sein.

Im Stand der Technik ist es also bekannt, zur Auftrennung von Mehrkomponentengemischen mehrere Destillationskolonnen, die in einem Verbund unterschiedliche Trennaufgaben erfüllen, oder eine Trennwandkolonne zu verwenden.

Wünschenswert wäre es, den Energieverbrauch des gesamten Destillationsverbunds zu minimieren. Bei der ausschließlichen Betrachtung einzelner Trennaufgaben stößt man hierbei an Grenzen.

In Frage kommen allenfalls die Verwendung neuer Einbauten, die einen geringeren Druckverlust und damit einen minimierten Exergieverlust bei hoher Trennleistung ermöglichen sowie eine optimierte Regelung (Prozesskontrolle).

Als weitere Möglichkeit kommt eine Brüdenverdichtung in Betracht, die jedoch aufgrund hoher Investitionskosten und Nutzung reiner Exergie (Strom) nur dann wirtschaftlich ist, wenn die Stoffe des zu trennenden Mehrkomponentengemischs einen ausreichend hohen Adiabatenexponenten aufweisen, der eine hohe Temperaturänderung bei relativ niedrigem Kompressionsaufwand erlauben würde.

Falls am betrachteten Produktionsstandort niederwertige Abwärme zur Verfügung steht, so ist die Nutzung dieser Abwärme als Heizmedium für die Destillation im Allgemeinen einer Brüdenverdichtung unter Verwendung reiner Exergie (Strom) vorzuziehen.

Vielseitigere Möglichkeiten bieten Maßnahmen wie eine thermische Kopplung (Wärmeverbund über Wärmetauscher), durch die der spezifische Energieverbrauch gesenkt werden kann.

US 2012048719 A1 offenbart ein Verfahren zur thermischen Trennung von Silangemischen, die Silane, ausgewählt aus Alkylchlorsilanen und Hydrogenchlorsilanen enthalten, in einer Destillationsvorrichtung, bei dem mindestens ein Teil der Wärme zum Beheizen der Destillationsvorrichtung von Brüden einer weiteren Destillationsvorrichtung übertragen wird und bei dem ein Silanprodukt mit Verunreinigungen von höchstens 200 ppm erhalten wird.

Nachteilig ist hierbei die notwendige Druckstufung, falls durch das aufzutrennende Stoffgemisch keine inhärente Temperaturspreizung gegeben ist. Darüber hinaus kann bei geringen Temperaturunterschieden zwischen Heizseite und Produktseite ein hoher Flächenbedarf für den zwischengeschalteten Wärmetauscher die Folge sein.

Durch die bereits beschriebenen Trennwandkolonnen sind bezogen auf Betriebs- und Investitionskosten Gesamteinsparungen von ungefähr 30% gegenüber einer herkömmlichen Reihenschaltung von zwei Kolonnen realisierbar. Daher sind Trennwandkolonnen gegenüber der klassischen Verschaltung von Destillationskolonnen zu bevorzugen.

Allerdings müssen Trennwandkolonnen meist größer dimensioniert werden als die entsprechenden Einzelapparate, die durch sie ersetzt werden sollen. Dabei entspricht die Bauhöhe der Trennwandkolonne mindestens der Bauhöhe eines der Einzelapparate und maximal der Summe der Bauhöhen der Einzelapparate.

Der Durchmesser der Trennwandkolonne entspricht in Abhängigkeit der hydraulischen Belastung mindestens dem geringsten Durchmesser der Einzelapparate und maximal dem größeren Durchmesser der Einzelapparate.

Abhängig von der Trennaufgabe (Mehrkomponentengemisch) können extreme Bauhöhen, hohe Kolonnendurchmesser und damit hohe Investitionskosten die Folge sein, was nachteilig ist.

Aus dieser Problematik ergibt sich die Aufgabenstellung der Erfindung.

Die Aufgabe der Erfindung wird gelöst durch ein Verfahren zur destillativen Trennung eines Drei- oder Mehrkomponentengemisches, enthaltend wenigstens einen Leichtsieder, wenigstens einen Mittelsieder und wenigstens einen Schwersieder, wobei das Drei- oder Mehrkomponentengemisch einer ersten Kolonne zugeführt wird, durch die der wenigstens eine Schwersieder als Sumpffraktion abgetrennt wird und eine Kopffraktion einer zweiten Kolonne zugeführt wird, wobei in der zweiten Kolonne der wenigstens eine Mittelsieder über einen Seitenabzug und der wenigstens eine Leichtsieder als Kopffraktion abgetrennt wird, sowie ein Sumpfabzug der zweiten Kolonne wieder der ersten Kolonne als Rücklauf zugeführt wird, wobei beide Destillationskolonnen vertikale Trennwände aufweisen, die bei der ersten Destillationskolonne bis an das obere Ende des Kolonneninnenraumes und bei der zweiten Destillationskolonne bis an das untere Ende des Kolonneninnenraumes reichen.

Die Aufgabe wird auch gelöst durch eine Vorrichtung zur destillativen Trennung eines Drei- oder Mehrkomponentengemisches, umfassend zwei Destillationskolonnen, die stofflich miteinander gekoppelt sind, indem Brüden einer ersten Destillationskolonne, der das Drei- oder Mehrkomponentengemisch zugeführt wird, kommunikativ mit dem Sumpf einer zweiten Destillationskolonne und Sumpfabzüge der zweiten Destillationskolonne kommunikativ mit einer Rücklaufsektion der ersten Destillationskolonne verbunden sind, wobei beide Destillationskolonnen vertikale Trennwände aufweisen, die bei der ersten Destillationskolonne bis an das obere Ende des Kolonneninnenraumes und bei der zweiten Destillationskolonne bis an das untere Ende des Kolonneninnenraumes reichen, wobei die zweite Kolonne einen oder mehrere Seitenabzüge unterhalb des Kopfabzuges und oberhalb des Sumpfabzuges aufweist.

Die Erfindung sieht vor, Destillationskolonnen stofflich miteinander zu koppeln. Zudem sind vertikale Trennwände in jede der Destillationskolonnen eingebracht.

Durch die stoffliche Kopplung der beiden Destillationskolonnen wird eine Addition der theoretischen Trennstufen der beiden Kolonnen erreicht. Bei Verwendung von zwei baugleichen Kolonnen resultiert so eine Verdopplung der theoretischen Trennstufen.

Die stoffliche Kopplung wird bewerkstelligt, in dem jede der Kolonnen mit der jeweils anderen mindestens zwei Verknüpfungen an räumlich getrennten Stellen aufweist.

Zwei solche stofflich gekoppelten Kolonnen sind hinsichtlich des Energiebedarfs mit einer einzigen Trennwandkolonne gleichwertig. Damit lassen sich große Energieeinsparungen realisieren, wobei aber im Vergleich zur Neuanschaffung einer herkömmlichen, einzelnen Trennwandkolonne niedrigere Investitionskosten anfallen, da herkömmliche, bereits bestehende Destillationskolonnen im Rahmen eines Revamp zu Trennwandkolonnen umgebaut werden und so miteinander verschaltet werden können, dass diese genannten zwei mit Trennwänden versehene Destillationskolonnen die Aufgabe einer Trennwandkolonne nach Stand der Technik erfüllen.

Die stofflich gekoppelten Kolonnen können jeweils mit einem eigenen Verdampfer und/oder Kondensator ausgestattet sein.

Die Leichtsiederfraktion und die Hochsiederfraktion können aus unterschiedlichen Kolonnen entnommen werden. Die Betriebsdrücke der Kolonnen werden so eingestellt, dass die vorgeschriebene Strömungsrichtung eingehalten wird. Auch ist es möglich, den Sumpfstrom der ersten Kolonne in einem Verdampfer teilweise oder vollständig zu verdampfen und anschließend zweiphasig oder in Form eines gasförmigen und eines flüssigen Stromes zur zweiten Kolonne zu führen.

Beim Drei- oder Mehrkomponentengemische handelt es sich vorzugsweise um ein Gemisch enthaltend Chlorsilane oder um eine Gemisch enthaltend Methylchlorsilane.

Vorzugsweise handelt es sich um Gemische aus der TCS- oder MCS-Synthese (TCS = Trichlorsilan, MCS = Methylchlorsilan) oder aus der Abscheidung von polykristallinem Silicium.

Vorzugsweise handelt es sich um ein Gemisch aus Chlorsilanen enthaltend TCS, STC, DCS sowie Spuren weiterer Verunreinigungen (Methylchlorsilane, Kohlenwasserstoffe, Hochsieder), wie es durch die Reaktion von handelsüblichem metallurgischem Silicium mit HCl in einem Wirbelschichtreaktor bei 350-400 °C erhalten wird.

In einem Verbund zur Herstellung von polykristallinem Silicium wird TCS als Roh-Silan entweder aus metallurgischem Silicium und HCl oder aus metallurgischem Silicium mit STC/H₂ (STC = Siliciumtetrachlorid) in einem Wirbelschichtreaktor erzeugt. Anschließend wird das Roh-Silan mittels Destillation/Reinigung zu TCS gereinigt. Aus dem gereinigten TCS wird polykristallines Silicium abgeschieden, wobei u.a. STC entsteht. Die anschließende Verwertung des STC (z. B. durch Hydrierung zu Trichlorsilan oder durch Verbrennung zu hochdisperser Kieselsäure bzw. Kieselsäureestern) ist üblich.

Bei der Abscheidung von polykristallinem Silicium aus einem Gemisch von Chlorsilan, insbesondere TCS, und Wasserstoff entsteht neben STC eine Fraktion hochsiedender Chlorsilane. Der Begriff "hochsiedende Chlorsilane" bezeichnet dabei Verbindungen, welche aus Silicium, Chlor, ggf. Wasserstoff, Sauerstoff und Kohlenstoff bestehen und einen höheren Siedepunkt als STC (57°C/bei 1013 hPa) aufweisen. Bevorzugt handelt es sich um Disilane HₙCl₆₋ₙSi₂ (n= 0 - 4) und höhere Oligo (chlor) silane vorzugsweise mit 2 bis 4 Si Atomen sowie Disiloxane HₙCl₆₋ₙSi₂O (n= 0 - 4) und höhere Siloxane vorzugsweise mit 2 bis 4 Si Atomen einschließlich zyklischer Oligosiloxane sowie deren Methylderivate.

Bei den Rückständen (Hochsieder) des Müller-Rochow-Prozesses handelt es im Wesentlichen um Tetrachlordimethyldisilan, Trichlortrimethyldisilan und Dichlortetramethyldisilan, also um Methylchlordisilane der allgemeinen Zusammensetzung Me₆₋ₓClₓSi₂. Diese können mit metallurgischem Silicium und HCl bei einer Temperatur von mindestens 300°C behandelt werden. Dabei entstehen TCS und STC.

Bei den Hochsiedern in Abgas der Abscheidung von polykristallinem Silicium (Siemens-Prozess) handelt es sich hauptsächlich um Chlordisilane der allgemeinen Zusammensetzung H₆₋ₓClₓSi₂ und ggf. Chlordisiloxane H₆₋ₓClₓSi₂O. Daneben sind in den Abgasen TCS, STC, DCS enthalten.

Die Erfindung und deren Unterschiede zum Stand der Technik werden im Folgenden anhand von Figuren erläutert.

### Kurzbeschreibung der Figuren

**Fig. 1** zeigt Verschaltungen von mehreren Kolonnen sowie eine Trennwandkolonne gemäß Stand der Technik.
**Fig. 2** zeigt die Verschaltung von zwei mit Trennwänden versehenen Kolonnen gemäß Erfindung.
**Fig. 3** zeigt eine klassische Verschaltung von Destillationskolonnen bestehend aus einer Abtriebskolonne mit Verdampfer und Kondensator sowie einer zweiten Destillationskolonne mit Verdampfer und Kondensator.
**Fig. 4** zeigt eine erfindungsgemäße Trennwandtandemkolonne mit Verdampfer und Kondensator, wie sie im Beispiel verwendet wird.

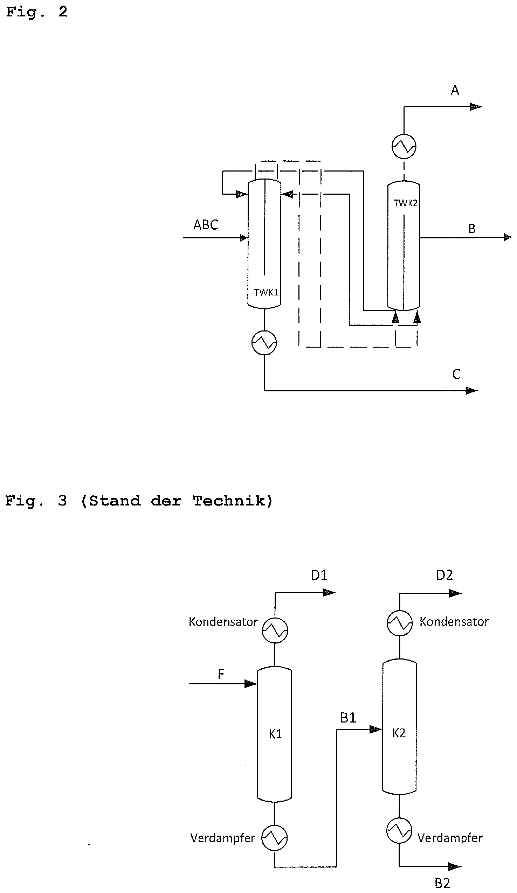

**Fig. 2** zeigt eine Trennwandkolonne durch Kopplung von zwei bestehenden Destillationskolonnen TWK1 und TWK2 gemäß Erfindung. Die Erfindung sieht vor, bestehende Destillationskolonnen stofflich miteinander zu koppeln, d.h. die Brüden der einen Kolonne direkt dem Kolonnensumpf der zweiten Kolonne zuzuführen, sowie den und/oder die Sumpfabzüge der anderen Kolonne als Rücklauf der ersten Kolonne zur Verfügung zu stellen. Die beiden Einzelapparate werden im Rahmen des Umbaus mit den notwendigen Trennwänden, Einbauten und Seitenabzügen ausgestattet.

Energetisch ist die Ausführung nach **Fig. 2** mit der Trennwandkolonne **14** in **Fig. 1** äquivalent. Der Umbau kann im Gegensatz zur Neuinvestition mit geringerem Investitionsaufwand erfolgen.

Die Destillationskolonnen sind vorzugsweise mit Trennstufen unterschiedlicher Art wie Trennböden (z.B. Siebböden, Festventilen), regellosen Packungen (Füllkörpern) oder strukturierten Packungen ausgestattet.

Die Einbauten bestimmen maßgeblich die Trennleistungen sowie den Druckverlust über die Destillationskolonnen.

Die genannten Destillationskolonnen besitzen vorzugsweise 1 - 200 theoretische Trennstufen, wobei die notwendige Anzahl an theoretischen Trennstufen von der Qualität/Verunreinigungsgrad des zu zerlegenden Ausgangsgemischs, der spezifizierten Reinheitsanforderung des Zielprodukts sowie von der relativen Flüchtigkeit der einzelnen Komponenten des Mehrkomponentengemischs (bezogen auf die Schlüsselkomponente) abhängig ist.

Die Destillationskolonnen werden vorzugsweise bei einem Abgasdruck von -1 bis +10 bar und einem Siede-Temperaturbereich von -20 bis + 200°C betrieben.

Bezogen auf einen Destillationsverbund, bestehend aus mehreren Einzelapparaten, können die Abgasdrücke - unter Berücksichtigung wirtschaftlicher Aspekte - unabhängig voneinander gewählt werden.

Die genannten Destillationskolonnen/Einzelapparate sind dabei vorzugsweise mit einem oder mehreren Verdampfersystemen für die Zuführung der Heizenergie ausgestattet.

Bei einem herkömmlichen Verdampfersystem werden ein oder mehrere Wärmeerzeuger über Verbindungsstücke/Passstücke an den Kolonnenkörper eines Einzelapparates geflanscht.

Dabei kann der Wärmeerzeuger aus verfahrenstechnischer Sicht in unterschiedlichster Form ausgeführt sein - vorzugsweise jedoch als Naturumlaufverdampfer.

Vorzugsweise ist der Kolonnenkörper mit einer weiteren Anbindung für ein zweites Verdampfersystem ausgestattet.

Werden wie in **Fig. 2** zwei Destillationskolonnen miteinander gekoppelt, so wird mindestens ein Brüdenrohr der ersten Kolonne direkt an den Kolonnenkörper der zweiten Kolonne geflanscht.

Hierfür kann, soweit vorhanden, eine bestehende Flanschverbindung am Kolonnenkörper verwendet werden. Sollte diese Anbindung nicht vorhanden sein, so muss diese nachgerüstet werden.

Vorzugsweise ist das Brüdenrohr als doppeltes Rohr ausgeführt. Dies ermöglicht es, mittels des Sumpfabzugs einer anderen Kolonne im Verbund zu heizen. Kondensation im Brüdenrohr lässt sich dadurch vermeiden.

Für den Rücklauf der ersten Kolonne wird der Sumpfabzug der zweiten Kolonne verwendet. Hierzu können beispielsweise die Rücklaufpumpen der ersten Kolonne mit dem Sumpfabzug der zweiten Kolonne verbunden werden, sofern sich die Pumpen als geeignet erweisen.

Bevorzugte Betriebsmittel für die Verdampfung sind Wasserdampf und/oder Thermoöle verschiedener Druck- und Temperaturstufen.

Die Wahl der verschiedenen Betriebsmittel richtet sich vorrangig nach wirtschaftlichen Aspekten sowie der Verfügbarkeit.

Die genannten Destillationskolonnen/Einzelapparate sind außerdem vorzugsweise mit einem oder mehreren Kondensationssystemen zur Kondensation des Brüdendampfes, zur Bereitstellung der Rücklaufmenge in die jeweilige Kolonne, ausgestattet.

Im ersten Kondensationsschritt werden nicht kondensierbare Brüdenmengen, bestehend aus Komponenten geringer Siedetemperaturen und/oder Inertgas, einem weiteren Kondensationsschritt und/oder einer weiteren Aufarbeitung/sonstigen Verwendung (vorzugsweise einem Wäschersystem) zugeführt.

Bevorzugte Betriebsmittel für die Kondensation sind Kühlwasser und/oder Kühlsole verschiedener Druck- und Temperaturstufen.

Die Wahl der verschiedenen Betriebsmittel richtet sich vorrangig nach wirtschaftlichen Aspekten sowie der Verfügbarkeit.

Für die Betriebsweise als Trennwandtandemkolonne benötigt man an einer der beiden Kolonnen einen oder vorzugsweise mehrere Seitenabzüge, an welchem das Zielprodukt abgezogen wird, wenn es sich um einen reinen Mittelsieder **B** handelt.

Die Lage am Umfang und Höhe des Kolonnenkörpers ist entsprechend der thermodynamischen Auslegung an der korrekten Position zu wählen. Sollte entsprechend dieser thermischen Auslegung der Abzug zwischen den beiden Kolonnen liegen, so kann das Zielprodukt aus der Rücklaufleitung "rechts der Trennwand" der einen Kolonne entnommen werden.

### Beispiel und Vergleichsbeispiel

### Vergleichsbeispiel - Klassische Verschaltung

**Fig. 3** zeigt eine klassische Destillationsanordnung bestehend aus einer Abtriebskolonne inklusive Verdampfer und Kondensator sowie einer Auftriebskolonne inklusive Verdampfer und Kondensator.

Der Stoffstrom **F** besteht aus einem chlorsilanhaltigen Gemisch mit einer Leichtsieder-, Mittelsieder- und einer Schwersiederfraktion.

In der Kolonne **K1** wird die Leichtsiederfraktion über den Stoffstrom **D1** abgetrennt.

Der Stoffstrom **B1** wird in die zweite Kolonne **K2** geführt, in der über den Stoffstrom **B2** die Schwersiederfraktion und über den Stoffstrom **D2** das Zielprodukt (Mittelsiederfraktion) abgezogen wird.

**Tabelle** 1 zeigt die Massenanteile der einzelnen Komponenten in den jeweiligen Teilströmen gemäß **Vergleichsbeispiel**.

**Tabelle 1**

| Stoffstrom | F | D1 | B1 | D2 | B2 |
|---|---|---|---|---|---|
| Komponente | | | | | |
| TCS | 99,5 % | 90 % | 99,9 % | 99,99 % | 99,99 % |
| DCS | 0,5 % | 10 % | - | - | - |
| C1 | <10 ppmw | - | 10 ppmw | 1 ppmw | 300 ppmw |
| C2 | <0,5 ppmw | 10 ppmw | 0,04 ppmw | 0,04 ppmw | - |
| C3 | <10 ppmw | 20 ppmw | - | - | - |

Bei C1-C3 handelt es sich um Spurenverunreinigungen wie Methylchlorsilane, Kohlenwasserstoffe und Dotierstoffverbindungen.

### Beispiel - Trennwandtandemkolonne

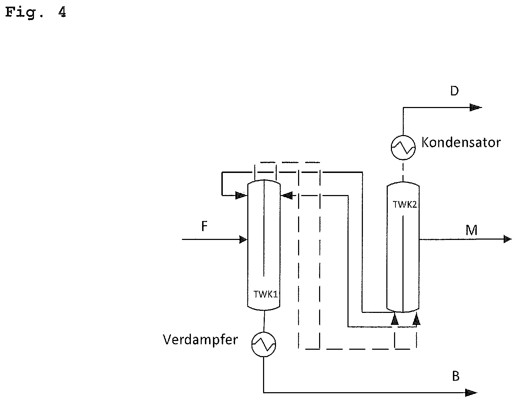

**Fig. 4** zeigt eine bevorzugte Ausführungsform einer erfindungsgemäßen Destillationskolonne umfassend eine erste Destillationskolonne **TWK1**, die als Trennwandkolonne ausgeführt ist, inklusive Verdampfer sowie einer zweiten Destillationskolonne **TWK2**, die ebenfalls als Trennwandkolonne ausgeführt ist, inklusive Kondensator.

Der Stoffstrom **F** besteht aus einem chlorsilanhaltigen Gemisch mit einer Leichtsieder-, Mittelsieder- und einer Schwersiederfraktion. In der Kolonne **TWK1** wird die Schwersiederfraktion (enthaltend C1) über den Stoffstrom **B** abgetrennt. In der zweiten Kolonne **TWK2** wird über den Stoffstrom **D** die Leichtsiederfraktion (enthaltend DCS und C3) und über den Stoffstrom **M** das Zielprodukt (Mittelsiederfraktion enthaltend TCS) abgezogen.

**Tabelle 2** zeigt die Massenanteile der einzelnen Komponenten in den jeweiligen Teilströmen gemäß **Beispiel**.

**Tabelle 2**

| Stoffstrom | F | D | B | M |
|---|---|---|---|---|
| Komponente | | | | |
| TCS | 99,5 % | 90 % | 99,9 % | 99,99 % |
| DCS | 0,5 % | 10 % | - | - |
| C1 | <10 ppmw | - | 300 ppmw | 1 ppmw |
| C2 | <0,5 ppmw | 10 ppmw | - | 0,04 ppmw |
| C3 | <10 ppmw | 20 ppmw | - | - |

Gegenüber dem Vergleichsbeispiel wird anhand von **Fig. 4** deutlich, dass auf je einen Verdampfer und Kondensator verzichtet wird.

## Patentansprüche

1. Verfahren zur destillativen Trennung eines Drei- oder Mehrkomponentengemisches, enthaltend wenigstens einen Leichtsieder, wenigstens einen Mittelsieder und wenigstens einen Schwersieder, wobei das Drei- oder Mehrkomponentengemisch einer ersten Kolonne zugeführt wird, durch die der wenigstens eine Schwersieder als Sumpffraktion abgetrennt wird und eine Kopffraktion einer zweiten Kolonne zugeführt wird, wobei in der zweiten Kolonne der wenigstens eine Mittelsieder über einen Seitenabzug und der wenigstens eine Leichtsieder als Kopffraktion abgetrennt wird, sowie ein Sumpfabzug der zweiten Kolonne wieder der ersten Kolonne als Rücklauf zugeführt wird, wobei beide Destillationskolonnen vertikale Trennwände aufweisen, die bei der ersten Destillationskolonne bis an das obere Ende des Kolonneninnenraumes und bei der zweiten Destillationskolonne bis an das untere Ende des Kolonneninnenraumes reichen.

2. Verfahren nach Anspruch 1, wobei die Kolonnen bei einem Abgasdruck von -1 bis + 10 bar und einem Siede-Temperaturbereich von -20 bis + 200 °C betrieben werden.

3. Verfahren nach Anspruch 1 oder nach Anspruch 2, wobei die Kolonnen ein oder mehrere Verdampfersysteme umfassen, die Wasserdampf oder Thermoöle verschiedener Druck- und Temperaturstufen als Betriebsmittel benutzen.

4. Verfahren nach einem der Ansprüche 1 bis 3, wobei die Kolonnen ein oder mehrere Kondensationssysteme umfassen, die Kühlwasser oder Kühlsole verschiedener Druck- und Temperaturstufen als Betriebsmittel benutzen.

5. Verfahren nach einem der Ansprüche 1 bis 4, wobei in einem ersten Kondensationsschritt nicht kondensierbare Kopfstromkomponenten einem weiteren Kondensationsschritt und/oder einem Wäschersystem zugeführt werden.

6. Verfahren nach einem der Ansprüche 1 bis 5, wobei das Drei- oder Mehrkomponentengemisch Chlorsilane als Mittelsieder enthält.

7. Vorrichtung zur destillativen Trennung eines Drei- oder Mehrkomponentengemisches, umfassend zwei Destillationskolonnen, die stofflich miteinander gekoppelt sind, indem Brüden einer ersten Destillationskolonne, der das Drei- oder Mehrkomponentengemisch zugeführt wird, kommunikativ mit dem Sumpf einer zweiten Destillationskolonne und Sumpfabzüge der zweiten Destillationskolonne kommunikativ mit einer Rücklaufsektion der ersten Destillationskolonne verbunden sind, wobei beide Destillationskolonnen vertikale Trennwände aufweisen, die bei der ersten Destillationskolonne bis an das obere Ende des Kolonneninnenraumes und bei der zweiten Destillationskolonne bis an das untere Ende des Kolonneninnenraumes reichen, wobei die zweite Kolonne einen oder mehrere Seitenabzüge unterhalb des Kopfabzuges und oberhalb des Sumpfabzuges aufweist.

8. Vorrichtung nach Anspruch 7, wobei beide Kolonnen 1 - 200 theoretische Trennstufen aufweisen.

9. Vorrichtung nach Anspruch 7 oder nach Anspruch 8, wobei wenigstens die erste Destillationskolonne ein oder mehrere Verdampfersysteme zum Verdampfen von flüssigen Sumpfströmen umfasst, die jeweils an den Kolonnenkörper geflanscht sind.

10. Vorrichtung nach einem der Ansprüche 7 bis 9, wobei wenigstens die zweite Destillationskolonne ein oder mehrere Kondensationssysteme zur Kondensation von dampfförmigen Brüdenströmen umfasst.

## Claims

1. Process for distillative separation of a mixture of three or more components comprising at least one low boiler, at least one medium boiler and at least one high boiler, wherein the mixture of three or more components is fed to a first column by means of which the at least one high boiler is removed as bottom fraction and a top fraction is fed to a second column, wherein in the second column the at least one medium boiler is removed via a sidestream takeoff and the at least one low boiler is removed as top fraction, and also a bottom takeoff stream from the second column is fed back to the first column as reflux, wherein both distillation columns have vertical dividing walls which in the case of the first distillation column extend as far as the upper end of the column interior and in the case of the second distillation column extend as far as the lower end of the column interior.

2. Process according to Claim 1, wherein the columns are operated at an offgas pressure of from -1 to +10 bar and a boiling temperature range of from - 20 to +200°C.

3. Process according to Claim 1 or Claim 2, wherein the columns comprise one or more evaporator systems which use water vapor or thermal oils of various pressure and temperature ratings as operating materials.

4. Process according to any one of Claims 1 to 3, wherein the columns comprise one or more condensing systems which use cooling water or cooling brine of various pressure and temperature ratings as operating materials.

5. Process according to any one of Claims 1 to 4, wherein in a first condensation stage uncondensable top stream components are fed to a further condensation stage and/or a scrubber system.

6. Process according to any one of Claims 1 to 5, wherein the mixture of three or more components comprises chlorosilanes as the medium boiler.

7. Apparatus for distillative separation of a mixture of three or more components, comprising two distillation columns coupled to one another so as to allow material transfer, in which vapors of a first distillation column, to which the mixture of three or more components is fed, are communicatively connected to the bottom of a second distillation column and bottom takeoff streams of the second distillation column are communicatively connected to a reflux section of the first distillation column, wherein both distillation columns have vertical dividing walls which in the case of the first distillation column extend as far as the upper end of the column interior and in the case of the second distillation column extend as far as the lower end of the column interior, wherein the second column has one or more sidestream takeoffs below the top takeoff and above the bottom takeoff.

8. Apparatus according to Claim 7, wherein both columns have 1-200 theoretical plates.

9. Apparatus according to Claim 7 or Claim 8, wherein at least the first distillation column comprises one or more evaporator systems for evaporating liquid bottom streams, which are in each case flanged to the column body.

10. Apparatus according to any one of Claims 7 to 9, wherein at least the second distillation column comprises one or more condensation systems for condensing vapor streams.

## Revendications

1. Procédé de séparation distillative d'un mélange à trois composants ou plus, contenant au moins un composant de point d'ébullition faible, au moins un composant de point d'ébullition moyen et au moins un composant de point d'ébullition élevé, le mélange à trois composants ou plus étant introduit dans une première colonne, dans laquelle ledit au moins un composant de point d'ébullition élevé est séparé en tant que fraction de fond et une fraction de tête est introduite dans une deuxième colonne, ledit au moins un composant de point d'ébullition moyen étant séparé par une sortie latérale et ledit au moins un composant de point d'ébullition faible en tant que fraction de tête dans la deuxième colonne, et une sortie de fond de la deuxième colonne étant réintroduite dans la première colonne en tant que reflux, les deux colonnes de distillation comprenant des parois de séparation verticales, qui s'étendent dans la première colonne de distillation jusqu'à l'extrémité supérieure de l'espace intérieur de la colonne et dans la deuxième colonne de distillation jusqu'à l'extrémité inférieure de l'espace intérieur de la colonne.

2. Procédé selon la revendication 1, dans lequel les colonnes sont exploitées à une pression du gaz d'échappement de -1 à +10 bar et dans une plage de température d'ébullition de -20 à +200 °C.

3. Procédé selon la revendication 1 ou la revendication 2, dans lequel les colonnes comprennent un ou plusieurs systèmes d'évaporation, qui utilisent de la vapeur d'eau ou des huiles thermiques à différents niveaux de pression et de température en tant qu'agents d'exploitation.

4. Procédé selon l'une quelconque des revendications 1 à 3, dans lequel les colonnes comprennent un ou plusieurs systèmes de condensation, qui utilisent de l'eau de refroidissement ou des saumures de refroidissement à différents niveaux de pression et de température en tant qu'agents d'exploitation.

5. Procédé selon l'une quelconque des revendications 1 à 4, dans lequel, dans une première étape de condensation, des composants de courant de tête non condensables sont introduits dans une étape de condensation supplémentaire et/ou un système d'épurateur.

6. Procédé selon l'une quelconque des revendications 1 à 5, dans lequel le mélange à trois composants ou plus contient des chlorosilanes en tant que composant de point d'ébullition moyen.

7. Dispositif pour la séparation distillative d'un mélange à trois composants ou plus, comprenant deux colonnes de distillation, qui sont couplées l'une avec l'autre en termes de matière, dans lequel les vapeurs d'une première colonne de distillation, dans laquelle le mélange à trois composants ou plus est introduit, communiquent avec le fond d'une deuxième colonne de distillation et les sorties de fond de la deuxième colonne de distillation communiquent avec une section de reflux de la première colonne de distillation, les deux colonnes de distillation comprenant des parois de séparation verticales, qui s'étendent dans la première colonne de distillation jusqu'à l'extrémité supérieure de l'espace intérieur de la colonne et dans la deuxième colonne de distillation jusqu'à l'extrémité inférieure de l'espace intérieur de la colonne, la deuxième colonne comprenant une ou plusieurs sorties latérales en dessous de la sortie de tête et au-dessus de la sortie de fond.

8. Dispositif selon la revendication 7, dans lequel les deux colonnes comprennent 1 à 200 étapes de séparation théoriques.

9. Dispositif selon la revendication 7 ou la revendication 8, dans lequel au moins la première colonne de distillation comprend un ou plusieurs systèmes d'évaporation pour l'évaporation de courants de fond liquides, qui sont chacun raccordés par une bride au corps de la colonne.

10. Dispositif selon l'une quelconque des revendications 7 à 9, dans lequel au moins la deuxième colonne de distillation comprend un ou plusieurs systèmes de condensation pour la condensation de courants de vapeur gazeux.
